# FASCICULE DE BREVET EUROPEEN

(11) **EP 3 019 414 B1**
(45) Date de publication et mention de la délivrance du brevet: **03.05.2017**
(21) Numéro de dépôt: 14749920.6
(22) Date de dépôt: 09.07.2014
(51) Int. Cl.: B65D 51/20, B65D 51/24

(54) **STRUCTURE DE CONDITIONNEMENT POUR LE STOCKAGE ET LA DISTRIBUTION D'UN PRODUIT EN VRAC**
VERPACKUNGSSTRUKTUR ZUR LAGERUNG UND VERTEILUNG EINES SCHÜTTGUTES
PACKAGING STRUCTURE FOR THE STORAGE AND DISTRIBUTION OF A BULK PRODUCT

(30) Priorité: 09.07.2013 FR 1356746
(43) Date de publication de la demande: 18.05.2016
(73) Titulaire: Ardagh MP Group Netherlands B.V., 7418 AH Deventer (NL); Ardagh MP West France S.A., 75015 Paris (FR)
(72) Inventeur: BRION, Alexandre, F-75013 Paris (FR)
(74) Mandataire: Jacobacci Coralis Harle
(86) Numéro de dépôt international: PCT/FR2014/051759
(87) Numéro de publication internationale: WO 2015/004386

(56) Documents cités:
- FR-A1- 2 915 969
- GB-A- 2 475 872

## Description

### DOMAINE TECHNIQUE AUQUEL SE RAPPORTE L'INVENTION

La présente invention concerne le domaine général de l'emballage.
Elle concerne plus particulièrement une structure de conditionnement pour le stockage et la distribution d'un produit en vrac, par exemple un produit en poudre tel que de la poudre de lait pour bébés ou du café en poudre.

### ARRIERE-PLAN TECHNOLOGIQUE

Certains produits, notamment les produits pulvérulents comme le lait en poudre pour bébés, par exemple, sont conditionnés dans des boites métalliques formées d'un corps cylindrique métallique dont la partie inférieure est munie d'une structure de fond, et dont la partie supérieure comporte une ouverture obturée par une structure de couvercle.

Comme présenté dans les documents EP-0 408 268, EP-1 595 808 ou encore EP-1 878 666, de manière classique, cette structure de couvercle comprend un anneau de montage métallique, associé à un organe d'obturation central en forme de membrane pelable, ou d'obturateur monobloc délimité par une ligne d'amorce de rupture.
Dans certains cas, un capot de surbouchage en matière plastique peut venir recouvrir l'ensemble de manière amovible.

La partie extérieure de l'anneau de montage est fixée sur la bordure qui délimite l'ouverture supérieure du corps de boite cylindrique, par exemple par sertissage.
Sa partie intérieure comporte une collerette annulaire plane dont la bordure interne délimite une ouverture pour l'accès au produit conditionné, sur le dessus de laquelle est fixée la membrane pelable, ou dans le prolongement de laquelle s'étend l'obturateur monobloc.

La membrane pelable est munie d'une languette de traction monobloc, ou l'obturateur monobloc est muni d'un anneau de traction rapporté, pour permettre leur désolidarisation de la collerette annulaire, lors de la première ouverture de la boite, par simple traction.

Cette collerette annulaire peut dans certains cas se prolonger vers l'intérieur par un plateau monobloc en forme de portion de disque, dont la bordure rectiligne interne délimite une partie de l'ouverture d'accès au produit conditionné.

Le capot de surbouchage sert après la première ouverture de la structure de conditionnement (c'est-à-dire après enlèvement de la membrane pelable ou de l'obturateur monobloc), pour obturer de manière amovible cette ouverture d'accès au produit.

Dans certains cas, en particulier lorsque le produit conditionné est du lait en poudre pour bébés, cette structure de conditionnement comporte encore un accessoire en forme de cuillère doseuse, munie d'une cupule de prélèvement prolongée par un manche, pour prélever des doses de produit.

Lors du conditionnement du produit, l'accessoire en forme de cuillère doseuse est soit introduit dans le volume de conditionnement, soit associé à la boite métallique, en dehors de ce volume de conditionnement, par exemple interposé entre l'organe d'obturation central de l'anneau de montage et le capot de surbouchage.

Après ouverture du conditionnement, cet accessoire est utilisé pour prélever les doses de produit souhaitées ; ensuite, il est replacé dans le volume de conditionnement, et le capot de surbouchage est mis en place.

Cependant, cet accessoire de prélèvement n'est alors pas toujours très facile d'accès, surtout lorsqu'il est enfoui dans la poudre, ou lorsqu'il est placé dans le fond de la boite du fait qu'il ne reste plus beaucoup de produit conditionné.

Dans le domaine des conditionnements obtenus en matière plastique, on connait par les documents FR-2 915 969, ou encore GB-2 475 872, des structures de couvercle en plastique moulé qui comportent des moyens permettant l'assemblage amovible de l'accessoire de prélèvement/distribution. Mais ces structures en matière plastique sont très différentes des conditionnements en métal. En particulier, elles nécessitent la mise en oeuvre de moyens techniques complexes pour leur obtention par moulage.

### OBJET DE L'INVENTION

La présente invention propose une structure de conditionnement métallique (ou essentiellement métallique) originale qui permet de faciliter l'accessibilité à cet accessoire de prélèvement, en vue d'optimiser son utilisation.

La structure de conditionnement selon l'invention, pour le stockage et la distribution d'un produit en vrac, par exemple un produit en poudre, est donc du type comportant :
- un contenant en forme de boîte, lequel contenant comporte (i) un corps de contenant métallique muni d'une partie inférieure et d'une partie supérieure, laquelle partie supérieure délimite une ouverture supérieure, et (ii) une structure de couvercle, pour obturer ladite ouverture supérieure,
   laquelle structure de couvercle comprend :
   (i) un anneau de montage métallique comportant - une partie extérieure apte à être fixée sur une bordure dudit corps de contenant délimitant ladite ouverture supérieure, et - une partie intérieure munie d'une collerette annulaire, destinée à s'étendre au niveau de ladite ouverture de corps, ladite partie intérieure comportant une bordure interne délimitant une ouverture d'accès au produit conditionné,
   (ii) un organe d'obturation de ladite ouverture d'accès au produit conditionné, consistant en une membrane pelable fixée hermétiquement de manière séparable sur ladite collerette annulaire, et
   (iii) un capot de surbouchage amovible, destiné à venir se positionner sur la bordure supérieure du corps de contenant, par-dessus ledit anneau de montage et son organe d'obturation associé, pour obturer ladite ouverture d'accès au produit conditionné, et
- un accessoire pour le prélèvement et la distribution d'une portion dudit produit conditionné.
Et conformément à la présente invention, cette structure de conditionnement est caractérisée par le fait qu'elle comporte des moyens pour réaliser un assemblage amovible dudit accessoire avec ledit anneau de montage métallique.

Selon un mode de réalisation préféré, la collerette annulaire de l'anneau de montage se prolonge vers l'intérieur par un plateau, lequel plateau est en forme de segment de disque, muni d'une bordure interne qui délimite une partie de ladite ouverture d'accès au produit conditionné, et lequel plateau s'étend dans le plan ou sensiblement dans le plan de ladite collerette annulaire.

L'accessoire pour le prélèvement et la distribution d'une portion du produit conditionné comporte avantageusement un manche à l'une des extrémités duquel est ménagée une partie structurelle fonctionnelle pour le prélèvement et la distribution du produit.
Selon une forme de réalisation préférée, cet accessoire consiste en une cuillère doseuse, munie d'une partie structurelle fonctionnelle en forme de cupule.

Selon une forme de réalisation particulière, lesdits moyens d'assemblage amovible comportent au moins un orifice ménagé dans ledit anneau de montage, lequel orifice est adapté pour recevoir la partie structurelle fonctionnelle ou le manche dudit accessoire.
Dans ce cadre, ledit ou lesdits orifices peuvent être réalisés dans le plateau qui prolonge la collerette annulaire de l'anneau de montage ; alors, ce plateau peut comporter un orifice, de contour fermé ou débouchant dans sa bordure interne, adapté pour recevoir, par encastrement, la partie structurelle fonctionnelle en forme de cupule dudit accessoire ; dans une variante de réalisation, ce plateau peut comporter au moins un orifice adapté pour recevoir le manche dudit accessoire.
L'orifice correspondant traverse le plateau, avec son axe s'étendant perpendiculairement ou sensiblement perpendiculairement au plan dudit plateau ; dans une variante de réalisation cet orifice est réalisé dans ou par une partie découpée et/ou pliée du plateau, de manière adaptée pour que son axe s'étende parallèlement ou sensiblement parallèlement au plan de ce plateau.

Dans une forme de réalisation particulière, le plateau comporte une zone plane ménagée en retrait du côté de la partie inférieure du corps de contenant et débouchant dans sa bordure interne, dans laquelle zone plane en retrait sont ménagés ledit ou lesdits orifices.

Pour certains des modes de réalisations précités, l'accessoire de prélèvement et de distribution comporte une structure d'accrochage agencée pour permettre son accrochage sur au moins un orifice ménagé dans ladite structure de couvercle, en vue de leur assemblage amovible.
Cette structure d'accrochage est alors avantageusement réalisée au niveau de l'extrémité libre du manche de l'accessoire, située à l'opposé de sa partie structurelle fonctionnelle.

Selon encore une variante de réalisation, l'accessoire comporte une structure d'accrochage agencée pour permettre son accrochage sur la bordure interne délimitant ladite ouverture d'accès au produit conditionné.
Alors, cette structure d'accrochage est avantageusement agencée pour permettre l'accrochage de l'accessoire sur la bordure interne du plateau qui prolonge la collerette annulaire de l'anneau de montage.
Dans ce cadre, ladite structure d'accrochage se présente de préférence sous la forme de deux bras délimitant entre eux une encoche d'emboitement sur ladite bordure interne délimitant ladite ouverture d'accès au produit conditionné.

### DESCRIPTION DETAILLEE D'UN EXEMPLE DE REALISATION

L'invention sera encore illustrée, sans être aucunement limitée, par la description suivante de plusieurs formes de réalisation possibles, données uniquement à titre d'exemple, en relation avec les dessins annexés dans lesquels :
- la figure 1 est une vue générale schématique et en perspective d'une première forme de réalisation d'une structure de conditionnement conforme à l'invention, constitué d'un contenant en forme de boite, dont la structure de couvercle comprend un anneau de montage avec un organe d'obturation en forme de membrane pelable, associé à un capot de surbouchage, et muni d'un accessoire de prélèvement/distribution du produit conditionné comportant une structure d'accrochage ;
- la figure 2 est une vue en perspective de l'anneau de montage de la structure de couvercle du conditionnement illustré sur la figure 1, dans laquelle la membrane pelable est en cours de pelage, au moment de la première ouverture ;
- la figure 3 est une vue en perspective partielle, illustrant l'accessoire de prélèvement/distribution accroché sur l'orifice d'accueil de l'anneau de montage de la structure de conditionnement des figures 1 et 2, de manière à y faciliter l'accessibilité ;
- la figure 4 est une vue schématique partielle qui illustre une variante de réalisation possible des moyens d'accrochage de l'accessoire ;
- la figure 5 est une vue schématique partielle qui illustre une autre possibilité de structure des moyens d'accrochage de l'accessoire ;
- la figure 6 est encore une vue schématique partielle qui illustre une autre possibilité de structure des moyens d'accrochage de l'accessoire ;
- la figure 7 est une vue en coupe selon le plan de coupe 7-7 de la figure 6 ;
- la figure 8 illustre une variante du mode de réalisation illustré sur les figures 6 et 7, vue de dessus ;
- la figure 9 est une vue partielle, en coupe, qui illustre encore une autre possibilité de structure des moyens d'accrochage de l'accessoire.

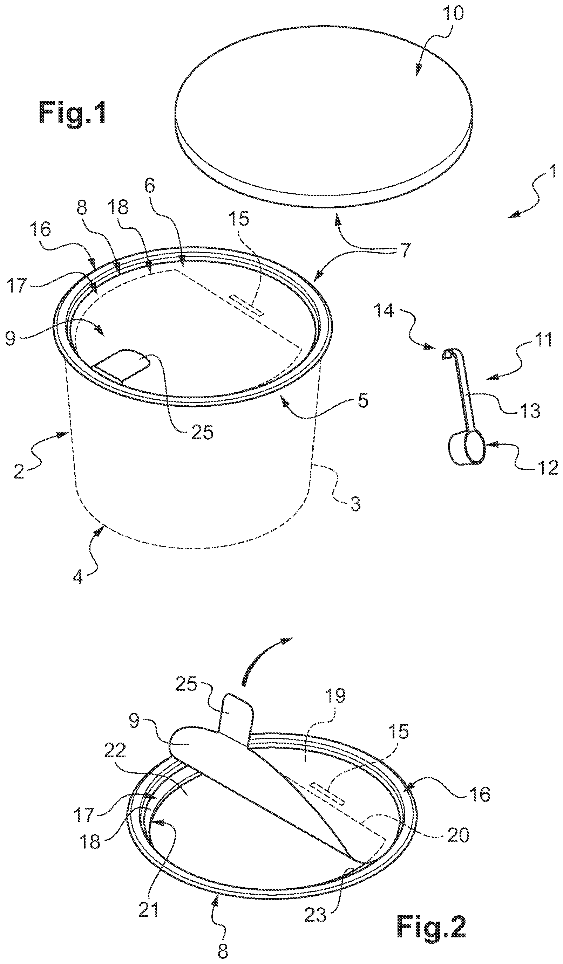

La structure de conditionnement 1 selon l'invention, telle que représenté sur la figure 1, est particulièrement adaptée pour le conditionnement d'un produit en poudre, par exemple de la poudre de lait ou du café en poudre, mais elle pourrait être utilisée pour le conditionnement de tout autre produit en vrac, même liquide ou semi-liquide.

Cette structure de conditionnement 1 comporte pour cela un contenant 2 en forme de boite comprenant un corps tubulaire 3, avantageusement réalisé en métal (simplement schématisé en pointillés sur la figure 1), dont la partie inférieure 4 est obturée par une structure de fond (monobloc ou rapportée), non représentée, et dont la partie supérieure 5 délimite une ouverture supérieure 6 obturée par une structure de couvercle 7.

Ce corps de contenant 3 comporte une paroi latérale qui peut être de configurations, dimensions et sections variées.

La structure de couvercle 7 est en particulier adaptée pour être rapportée sur un corps de contenant 3 à section circulaire. Cette structure de couvercle 7 pourrait également être adaptée pour être montée sur un corps ayant une autre forme/section : ovale, carrée, rectangulaire, oblongue, etc. ; sa forme générale serait alors adaptée en conséquence.

Le matériau constitutif de ce corps de contenant 3, et son procédé de fabrication, peuvent être choisis par l'homme du métier.
Par exemple, le corps de contenant est réalisé en métal, notamment en acier ou en aluminium, choisi en fonction du produit à conditionner.

De même, le matériau constitutif de la structure de fond 4 et son procédé de fabrication, ainsi que son montage sur le corps de contenant 3, peuvent être choisis par l'homme du métier.

La structure de couvercle 7 est ici formée - d'un anneau de montage 8 associé à une membrane pelable 9 et - d'un capot de surbouchage 10.

De plus, la structure de conditionnement 1 comporte encore un accessoire 11 pour le prélèvement et la distribution de portions du produit en poudre conditionné, qui se présente ici sous la forme d'une cuillère doseuse, par exemple réalisée en matière plastique ; et il est prévu des moyens pour l'assemblage amovible de l'accessoire 11 avec la structure de couvercle 7, ici en forme d'au moins un orifice ménagé sur l'anneau de montage 8 pour permettre l'accrochage dudit accessoire de prélèvement/distribution 11, ce dernier comprenant pour cela une structure de crochetage adaptée.

En l'occurrence, la cuillère de prélèvement/distribution 11 est constituée d'une partie structurelle fonctionnelle en forme de cupule 12 prolongée par un manche 13 dont l'extrémité libre comporte un retour en forme de structure de crochetage 14 (dite encore notamment « structure d'accrochage ») ; et cette structure de crochetage 14 est adaptée pour venir s'accrocher sur/dans un orifice 15 ménagé ici sur l'anneau de montage 8, tel que détaillé ci-dessous.

La structure de crochetage 14 a ici, par exemple, une forme générale de U qui s'ouvre en direction de la cupule 12.

La structure de couvercle 7 est adaptée pour être rapportée au niveau de l'extrémité supérieure 5 du corps de contenant 3.
Elle comprend, comme illustré également sur la figure 2, - l'anneau de montage 8, fixé sur la bordure supérieure du corps 3 qui délimite l'ouverture supérieure 6 par toute technique appropriée, par exemple par sertissage, associé à la membrane pelable 9, et - le capot de surbouchage 10.

L'anneau de montage 8 consiste avantageusement en une pièce métallique, par exemple réalisée en acier ou en aluminium.
La forme et les dimensions de cet anneau 8 sont adaptées en fonction de la section du corps de contenant 3 sur lequel il est monté.
En l'occurrence, cet anneau 8 a une forme générale annulaire ou circulaire.

Tel que représenté en particulier sur la figure 2 (la membrane 9 étant en cours de pelage), l'anneau 8 comprend :
- une partie annulaire périphérique extérieure 16, adaptée pour être solidarisée mécaniquement avec la bordure libre du corps de contenant 3, par exemple par sertissage, et
- une partie intérieure 17, destinée à s'étendre jusqu'à l'ouverture 6 du corps de contenant 3.

La partie intérieure 17 se compose ici d'une collerette annulaire plane 18 munie, sur une partie de sa périphérie, d'un plateau 19 en forme de segment de disque, s'étendant jusqu'à une bordure interne rectiligne 20.
Cette bordure interne 20 a une épaisseur qui correspond ici à l'épaisseur du plateau 19 ; en général, cette bordure 20 consiste en un bord libre roulé, notamment pour éviter à l'utilisateur de se couper lors de la manipulation de cette structure de conditionnement 1, conférant ainsi une épaisseur plus importante à cette bordure 20.

Cette partie intérieure 17 est délimitée par une bordure interne 21, définissant une ouverture centrale 22 permettant l'accès au produit conditionné ; cette bordure interne 21 se compose ici, pour une partie, de la bordure interne 20 du plateau 19 et, pour une autre partie, de la bordure interne libre 23, en forme de portion de cercle, de la collerette annulaire 18.

Le plateau 19 consiste ici en un élément plan, en forme générale de segment de disque, réalisé monobloc avec l'anneau 8. Il s'étend dans le plan de la collerette annulaire 18. L'ouverture centrale 22, d'accès au produit conditionné, présente en l'occurrence une forme générale de disque tronqué partiellement.

La bordure libre interne 20 du plateau 19 peut être utilisée pour araser la dose de produit prélevée dans la cupule 12 de la cuillère doseuse 11.

L'orifice 15 adapté pour permettre l'accrochage de la cuillère 11, par sa structure d'accrochage 14, est réalisé à proximité de la bordure libre interne 20 du plateau 19.

L'axe traversant de cet orifice 15 s'étend perpendiculairement au plan du plateau 19.

Cet orifice 15 a une forme allongée, en l'occurrence de section rectangulaire ou sensiblement rectangulaire, dont le grand axe s'étend parallèlement à ladite bordure interne 20, avantageusement centrée sur cette dernière.

Mais toute autre forme et/ou positionnement de cet orifice 15 peut être envisagé.

Les longueur et largeur de l'orifice 15 sont légèrement supérieurs aux largeur et épaisseur de la structure de crochetage 14 de l'accessoire 11, pour optimiser ses caractéristiques d'accrochage.

La membrane pelable 9, représentée sur les figures 1 et 2, est par exemple du type de celle décrite dans le document EP-1 878 666.

Cette membrane pelable 9, encore dénommée « opercule », est fixée hermétiquement sur l'anneau 8, avantageusement par une liaison de type collage/soudage (par exemple une technique de thermo-soudage). Elle vient recouvrir le plateau 19 avec son orifice 15, et l'ouverture centrale 22.

Cette membrane 9 est ici solidarisée, au niveau de sa bordure périphérique extérieure, sur la face supérieure de la collerette annulaire 18 de l'anneau 8.

Au niveau de sa bordure périphérique, la membrane pelable 9 comporte encore une languette 25, pliée en regard et contre sa face supérieure (figure 1). Selon d'autres formes de réalisation, cette membrane 9 peut être pourvue de plusieurs languettes 25 (au moins deux), convenablement réparties.
La fonction de cette languette 25 est de faciliter le pelage de la membrane 9 par l'utilisateur, par rapport à l'anneau 8.

Cette languette 25 est avantageusement réalisée monobloc avec la membrane 9, et consiste en une extension de matière.
De manière alternative, la languette 25 peut être rapportée sur la membrane 9, directement ou indirectement (la membrane 9 est alors obtenue par l'assemblage d'au moins deux pièces).

La membrane 9 est ici rapportée sur l'anneau 8, de sorte que sa languette 25 s'étende de manière diamétralement opposée au plateau 19 et à l'orifice 15.

De son côté, le capot de surbouchage 10 est avantageusement réalisé en matière plastique. Il est adapté pour venir coiffer la partie supérieure du corps de contenant 3 et en particulier pour venir totalement recouvrir l'anneau 8 et l'orifice 22 d'accès au produit, cela de manière amovible et de préférence de manière hermétique. Sa structure d'emboitement sur le dessus du corps de contenant 3 est adaptée en conséquence.

En pratique, l'anneau 8 et sa membrane pelable 9 sont fabriqués indépendamment l'un de l'autre par des techniques connues de l'homme du métier, avant d'être assemblés par exemple par une technique de thermo-soudage, cela sur un premier site de fabrication.

L'ensemble 8-9 obtenu peut aisément être stocké et transporté jusqu'à un site de conditionnement où il est monté sur le corps d'un contenant 3, après son remplissage en produit.
Le capot de surbouchage est ensuite emboité par-dessus cet ensemble anneau 8 / membrane 9.

La cuillère de prélèvement/distribution 11 est placée dans le volume de conditionnement, avec le produit conditionné (éventuellement emballée dans un petit sachet en matière plastique), ou bien elle interposée entre la membrane 9 et le capot de surbouchage 10, si la place disponible est suffisante, ou encore associée au corps de contenant 3 par tout autre moyen approprié.

Une fois la structure de conditionnement 1 ouverte par enlèvement du capot de surbouchage 10 et de la membrane pelable 9 (au moyen d'une traction exercée sur sa languette 25), le produit conditionné est accessible et peut être prélevé au moyen de la cuillère accessoire 11.

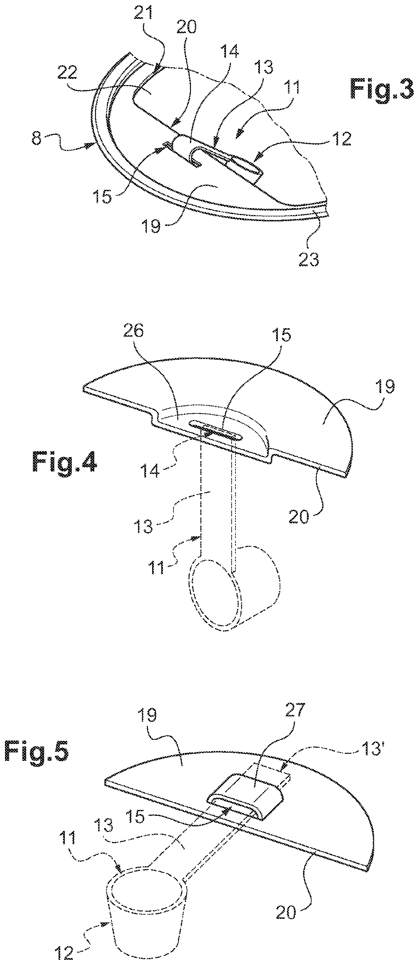

Après le prélèvement, la cuillère 11 est accrochée (ou suspendue) sur le plateau 19, par l'intermédiaire de sa structure de crochetage 14 et de l'orifice d'accrochage 15 dudit plateau 19, comme illustré sur la figure 3, en vue de faciliter sa préhension, lors d'une utilisation ultérieure.

En particulier, la structure de crochetage 14 recouvre la bande de matière s'étendant entre l'orifice d'accrochage 15 et la bordure interne rectiligne 20.

Le capot de surbouchage 10 peut ensuite être convenablement rapporté, pour obturer l'ensemble.

A titre de variante, l'organe d'obturation de l'ouverture d'accès au produit conditionné, associé à l'anneau de montage 8, peut être constitué d'un obturateur monobloc, équipé d'un anneau de traction, prolongeant vers l'intérieur la collerette annulaire 18 et séparé de cette dernière par une ligne d'amorce de rupture.
Dans ce cas, l'orifice 15 pour l'accrochage de l'accessoire de prélèvement/distribution 11 sera obturé par tout moyen amovible adapté pour assurer l'étanchéité du volume de conditionnement, avant la première ouverture (par exemple une membrane étanche collée de manière amovible).

On a représenté sur les figures 4 à 8 des variantes de réalisation du plateau qui prolonge la collerette annulaire de la structure de couvercle.

Par mesure de simplification, seul le plateau en question a été représenté sur ces figures, avec l'accessoire 11 en forme de cuillère doseuse, le reste de la structure de conditionnement pouvant correspondre au mode de réalisation représenté sur les figures 1 à 3. De plus, pour faciliter la compréhension, les parties identiques ou similaires au mode de réalisation des figures 1 à 3 conservent les mêmes repères.

Dans le mode de réalisation représenté sur la figure 4, le plateau 19 comporte une zone plane 26 qui est ménagée en retrait, du côté de la partie inférieure du corps de contenant, et dans laquelle est ménagé l'orifice 15.
Cette zone plane en retrait 26 s'étend dans un plan sous-jacent parallèle au plan général du plateau 19, par exemple décalé de quelques millimètres.
Elle débouche dans la bordure interne 20 et peut avoir une forme générale de portion de disque.
L'axe de l'orifice 15 s'étend perpendiculairement au plan de la zone 26 et au plan du plateau 19.
Cette zone plane en retrait 26 peut être obtenue par emboutissage lors de la fabrication de l'anneau de montage 8.
Elle permet l'intégration au moins partielle de l'épaisseur de la structure de crochetage 14 de l'accessoire 11, pour éviter la saillie ou la saillie trop importante de cette structure de crochetage 14 au dessus du plan du plateau 19, susceptible de gêner la mise en place du capot de surbouchage.

Dans une variante de réalisation, plusieurs orifices 15 peuvent être ménagés dans la zone en retrait 26, et plus généralement sur le plateau 19.

Toute forme d'orifice 15 peut aussi être envisagée, en fonction de la forme de la structure de crochetage 14.

Dans le mode de réalisation illustré sur la figure 5, l'orifice 15 est réalisé au moyen d'une partie de matière 27 découpée et pliée dans le plateau 19.
Cette partie de matière 27 forme une sorte de languette ou de pont en saillie définissant un orifice 15 dont l'axe s'étend parallèlement ou sensiblement parallèlement au plan du plateau 19. La section de l'orifice 15 est adaptée pour permettre l'insertion et le maintien de l'extrémité libre 13' du manche 13 de l'accessoire 11, tel que représenté sur la figure 5.
Ici, l'extrémité libre 13' du manche 13, située à l'opposé de la partie structurelle fonctionnelle 12 en forme de cupule, est droite, dépourvue de structure de crochetage.
Le manche 13 de l'accessoire 11 s'étend alors parallèlement au plan du plateau 19 ; il est maintenu par un léger serrage au sein de l'orifice 15 et peut être retiré et remis en place très facilement (par un mouvement en translation).
De préférence la cupule 12 est orientée vers la partie inférieure du corps de contenant.
Dans une variante de réalisation, la languette de matière 27 peut être réalisée dans une zone plane en retrait, telle qu'illustrée sur la figure 4, pour éviter sa saillie au dessus du plan du plateau 19, ou pour éviter une saillie trop importante.

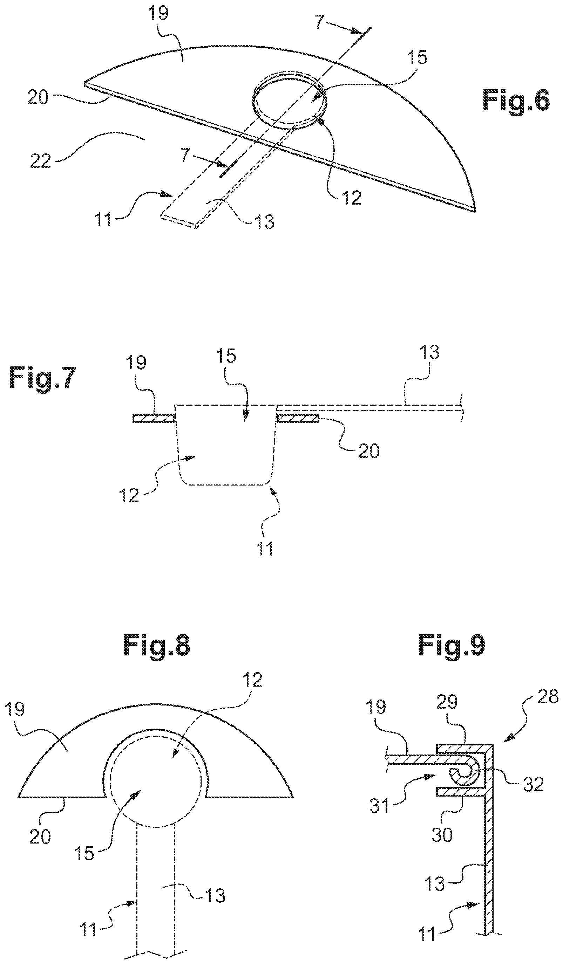

Dans le mode de réalisation représenté sur les figures 6 et 7, le plateau 19 comporte un orifice 15 adapté pour recevoir et maintenir de manière amovible la partie structurelle fonctionnelle 12 de l'accessoire 11.
En l'occurrence, l'orifice 15 a ici une forme générale circulaire, adaptée pour recevoir la cupule circulaire 12 de l'accessoire 11. Son manche 13 s'étend alors parallèlement au plan du plateau 19, juste au dessus de l'ouverture 22 d'accès au produit conditionné.
Si besoin, la bordure supérieure de la cupule 12 sera équipée d'un léger rebord périphérique pour assurer son maintien correct sur la bordure de l'orifice 15.

Sur les figures 6 et 7, l'orifice 15 est réalisé intégralement dans l'encombrement du plateau 19.

La figure 8 illustre une variante de réalisation dans laquelle l'orifice 15 est simplement partiellement réalisé dans l'encombrement du plateau 19 et débouche dans sa bordure interne 20. Pour assurer le maintien par encastrement de l'accessoire, la section de l'orifice circulaire 15 est supérieure à un demi-disque.
Là encore, si besoin, la bordure supérieure de la cupule 12 sera équipée d'un léger rebord périphérique pour assurer son maintien correct sur la bordure de l'orifice 15.

La figure 9 est une vue en coupe qui illustre une forme de réalisation dans laquelle le plateau 19 est de structure classique, avec un accessoire de prélèvement/distribution 11 muni de moyens 28 permettant sa fixation amovible sur la bordure interne 20 dudit plateau 19.
En l'occurrence, l'extrémité libre du manche 13 de l'accessoire 11 (opposée à la cupule 12), comporte une structure d'accrochage 28 qui se présente sous la forme de deux bras parallèles 29 et 30 délimitant entre eux une encoche d'emboitement 31 (pour assurer avantageusement un emboitement élastique, dit encore « clipsage »).
Cette encoche d'emboitement 31 permet l'accrochage à volonté de l'accessoire 11 sur la bordure interne 20 du plateau 19, par simple insertion à légère force, ainsi que son décrochage. On remarque ici que cette bordure interne 20 du plateau 19 comporte un roulé d'extrémité 32 sur lequel vient se positionner l'encoche d'emboitement 31.

On notera qu'une structure d'accrochage 28 identique ou similaire peut être prévue pour assurer l'accrochage de l'accessoire 11 à n'importe quel endroit de la bordure 21 qui délimite l'ouverture 22 d'accès au produit conditionné.

Ce mode de réalisation présente l'intérêt de ne pas à avoir besoin de modifier les structures connues de couvercles.

Encore à titre de variante, les modes d'assemblages illustrés sur les figures 6 à 9 peuvent être envisagée avec une zone plane en retrait, telle qu'illustrée sur la figure 4, pour éviter la saillie de l'accessoire 11 au dessus du plan du plateau 19, ou pour éviter une saillie trop importante.

Dans d'autres variantes de réalisation possibles, plusieurs orifices 15 peuvent être prévus pour permettre l'accrochage d'un ou de plusieurs accessoires 11.
En outre, le ou les orifices 15 peuvent être ménagés à d'autres endroits, par exemple dans la partie circulaire de la collerette annulaire, ou encore dans une patte s'étendant verticalement ou en biais, vers le fond du contenant, à partir de l'anneau 8.

## Revendications

1. Structure de conditionnement pour le stockage et la distribution d'un produit en vrac, par exemple d'un produit en poudre, laquelle structure de conditionnement (1) comporte :
- un contenant (2) en forme de boîte, lequel contenant (2) comporte (i) un corps de contenant métallique (3) muni d'une partie inférieure (4) et d'une partie supérieure (5), laquelle partie supérieure (5) délimite une ouverture supérieure (6), et (ii) une structure de couvercle (7), pour obturer ladite ouverture supérieure (6),
laquelle structure de couvercle (7) comprend :
(i) un anneau de montage métallique (8) comportant - une partie extérieure (16) apte à être fixée sur une bordure dudit corps de contenant (3) délimitant ladite ouverture supérieure (6), et - une partie intérieure (17) munie d'une collerette annulaire (18), destinée à s'étendre au niveau de ladite ouverture supérieure (6), ladite partie intérieure (17) comportant une bordure interne (21) délimitant une ouverture (22) d'accès au produit conditionné,
(ii) un organe d'obturation (9) de ladite ouverture (22) d'accès au produit conditionné, consistant en une membrane pelable (9) fixée hermétiquement de manière séparable sur ladite collerette annulaire (18), et
(iii) un capot de surbouchage amovible (10), destiné à venir se positionner sur la bordure supérieure du corps de contenant (3), par-dessus ledit anneau de montage (8) et son organe d'obturation (9) associé, pour obturer ladite ouverture (22) d'accès au produit conditionné, et
- un accessoire (11) pour le prélèvement et la distribution d'une portion dudit produit conditionné,
**caractérisée en ce que** ladite structure de conditionnement (1) comporte des moyens (14, 15, 28) pour réaliser un assemblage amovible dudit accessoire (11) avec ledit anneau de montage métallique (8).

2. Structure de conditionnement selon la revendication 1, **caractérisée en ce que** la collerette annulaire (18) de l'anneau de montage (8) se prolonge vers l'intérieur par un plateau (19), lequel plateau (19) est en forme de segment de disque, muni d'une bordure interne (20) qui délimite une partie de ladite ouverture (22) d'accès au produit conditionné, et lequel plateau (19) s'étend dans le plan ou sensiblement dans le plan de ladite collerette annulaire (18).

3. Structure de conditionnement selon l'une quelconque des revendications 1 ou 2, **caractérisée en ce que** ledit accessoire (11), pour le prélèvement et la distribution du produit, comporte un manche (13) à l'une des extrémités duquel est ménagée une partie structurelle fonctionnelle (12) pour le prélèvement et la distribution du produit.

4. Structure de conditionnement selon la revendication 3, **caractérisée en ce que** ledit accessoire (11), pour le prélèvement et la distribution du produit, consiste en une cuillère doseuse, munie d'une partie structurelle fonctionnelle en forme de cupule (12).

5. Structure de conditionnement selon les revendications 2 et 3 prises en combinaison, **caractérisée en ce que** lesdits moyens d'assemblage amovible comportent au moins un orifice (15) ménagé dans ledit anneau de montage (8), adapté pour recevoir la partie structurelle fonctionnelle (12) ou le manche (13) dudit accessoire (11).

6. Structure de conditionnement selon la revendication 5, **caractérisée en ce que** ledit ou lesdits orifices (15) sont réalisés dans le plateau (19) qui prolonge la collerette annulaire (18) de l'anneau de montage (8).

7. Structure de conditionnement selon les revendications 4 et 6 prises en combinaison, **caractérisée en ce que** ledit plateau (19) comporte un orifice (15), de contour fermé ou débouchant dans sa bordure interne (20), adapté pour recevoir, par encastrement, la partie structurelle fonctionnelle (12) en forme de cupule dudit accessoire (11).

8. Structure de conditionnement selon les revendications 4 et 6 prises en combinaison, **caractérisée en ce que** ledit plateau (19) comporte au moins un orifice (15) adapté pour recevoir le manche (13) dudit accessoire (11).

9. Structure de conditionnement selon la revendication 8, **caractérisée en ce que** ledit orifice (15) traverse ledit plateau (19), son axe s'étendant perpendiculairement ou sensiblement perpendiculairement au plan dudit plateau (19).

10. Structure de conditionnement selon la revendication 8, **caractérisée en ce que** ledit orifice (15) est réalisé dans ou par une partie découpée et/ou pliée (27) dudit plateau (19), de manière adaptée pour que son axe s'étende parallèlement ou sensiblement parallèlement au plan dudit plateau (19).

11. Structure de conditionnement selon l'une quelconque des revendications 6 à 10, **caractérisée en ce que** ledit plateau (19) comporte une zone plane (26) ménagée en retrait du côté de la partie inférieure (4) du corps de contenant (3) et débouchant dans sa bordure interne (20), dans laquelle zone plane en retrait (26) sont ménagés ledit ou lesdits orifices (15).

12. Structure de conditionnement selon l'une quelconque des revendications 1 à 11, **caractérisée en ce que** ledit accessoire (11) comporte une structure d'accrochage (14) agencée pour permettre son accrochage sur au moins un orifice (15) ménagé dans ladite structure de couvercle (7), en vue de leur assemblage amovible.

13. Structure de conditionnement selon les revendications 3 et 12 prises en combinaison, **caractérisée en ce que** ladite structure d'accrochage (14) est réalisée au niveau de l'extrémité libre (13') du manche (13) dudit accessoire (11), située à l'opposé de sa partie structurelle fonctionnelle (12).

14. Structure de conditionnement selon la revendication 1, **caractérisée en ce que** ledit accessoire (11) comporte une structure d'accrochage (28) agencée pour permettre son accrochage sur la bordure interne (21) délimitant ladite ouverture (22) d'accès au produit conditionné.

15. Structure de conditionnement selon les revendications 2 et 14 prises en combinaison, **caractérisée en ce que** ledit accessoire (11) comporte une structure d'accrochage (28) agencée pour permettre son accrochage sur la bordure interne (20) du plateau (19) qui prolonge la collerette annulaire (18) de l'anneau de montage (8).

16. Structure de conditionnement selon l'une quelconque des revendications 14 ou 15, **caractérisée en ce que** ladite structure d'accrochage (28) se présente sous la forme de deux bras (29, 30) délimitant entre eux une encoche (31) d'emboitement sur ladite bordure interne (21) délimitant ladite ouverture (22) d'accès au produit conditionné.

## Patentansprüche

1. Verpackungsstruktur zur Lagerung und Verteilung eines Schüttguts, zum Beispiel eines Guts in Pulverform, wobei die Verpackungsstruktur (1)
- einen Behälter (2) in Form einer Büchse, wobei der Behälter (2)
(i) einen metallischen Behälterkörper (3) mit einem unteren Teil (4) und einem oberen Teil (5), wobei der obere Teil (5) eine obere Öffnung (6) begrenzt, und
(ii) eine Deckelstruktur (7) zum Verschließen der oberen Öffnung (6) aufweist,
wobei die Deckelstruktur (7) folgendes aufweist:
(i) einen metallischen Montagering (8) mit - einem äußeren Teil (16), der geeignet ist, auf einem die obere Öffnung (6) begrenzenden Rand des Behälterkörpers (3) befestigt zu werden, und - einen inneren, mit einem ringförmigen Kragen (18) versehenen Teil (17), der dazu bestimmt ist, sich auf der Ebene der oberen Öffnung (6) zu erstrecken, wobei der innere Teil (17) einen inneren Rand (21) aufweist, der eine Öffnung (22) für den Zugang zum verpackten Gut begrenzt,
(ii) ein Organ (9) zum Verschließen der Öffnung (22) für den Zugang zum verpackten Gut, das aus einer abziehbaren, in abnehmbarer Weise hermetisch auf dem ringförmigen Kragen (18) befestigten Membrane (9) besteht, und
(iii) einen abnehmbaren Überwurfdeckel (10), der dazu bestimmt ist, auf dem oberen Rand des Behälterkörpers (3) über dem Montagering (8) und dessen zugehörigem Verschlußorgan (9) angeordnet zu werden, um die Öffnung (22) für den Zugang zum verpackten Gut zu verschließen, und
- ein Zubehör (11) zum Entnehmen und Verteilen einer Portion des verpackten Guts
aufweist,
**dadurch gekennzeichnet, daß** die Verpackungsstruktur (1) Mittel (14, 15, 28) zum Bilden einer trennbaren Einheit aus dem Zubehör (11) und dem metallischen Montagering (8) aufweist.

2. Verpaclcungsstruktur gemäß Anspruch 1, dadurch gelcennzeichnet, daß sich der ringförmige Kragen (18) des Montagerings (8) zum Inneren hin durch eine Platte (19) verlängert, wobei die Platte (19) die Form eines Kreisplattensegments aufweist, das mit einem inneren Rand (20) versehen ist, der einen Teil der Öffnung (22) für den Zugang zum verpackten Gut begrenzt, und wobei sich die Platte (19) in der Ebene oder im Wesentlichen n der Ebene des ringförmigen Kragens (18) ersteckt.

3. Verpackungsstruktur gemäß einem der Ansprüche 1 oder 2, **dadurch gekennzeichnet, daß** das Zubehör (11) für das Entnehmen und Verteilen des Guts einen Stiel (13) aufweist, an dessen einem der Enden ein funktionelles Strukturteil (12) zum Entnehmen und Verteilen des Guts ausgebildet ist.

4. Verpackungsstruktur gemäß Anspruch 3, **dadurch gekennzeichnet, daß** das Zubehör (11) für das Entnehmen und Verteilen des Guts aus einem Dosierlöffel besteht, der mit einem funktionellen Strukturteil in Form einer Pfanne (12) versehen ist.

5. Verpackungsstruktur gemäß den Ansprüchen 2 und 3 in Kombination, **dadurch gekennzeichnet, daß** die Mittel zum Bilden einer trennbaren Einheit wenigstens ein im Montagering (8) ausgebildetes Loch (15) aufweisen, das dazu ausgelegt ist, das funktionelle Strukturteil (12) oder den Stiel (13) des Zubehörs (11) aufzunehmen.

6. Verpackungsstruktur gemäß Anspruch 5, **dadurch gekennzeichnet, daß** das oder die Löcher (15) in der Platte (19) ausgebildet sind, die den ringförmigen Kragen (18) des Montagerings (8) verlängert.

7. Verpackungsstruktur gemäß den Ansprüchen 4 und 6 in Combination, **dadurch gekennzeichnet, daß** die Platte (19) ein Loch (15) mit geschlossener Kontur oder mit Öffnung in deren innerem Rand (20) aufweist, das dazu ausgelegt ist, das funktionelle Strukturteil in Form einer Pfanne (12) durch Einlegen aufzunehmen.

8. Verpackungsstruktur gemäß den Ansprüchen 4 und 6 in Kombination, **dadurch gekennzeichnet, daß** die Platte (19) wenigstens ein Loch (15) aufweist, das dazu ausgelegt ist, den Stiel (13) des Zubehörs (11) aufzunehmen.

9. Verpackungsstruktur gemäß Anspruch 8, **dadurch gekennzeichnet, daß** das Loch (15) die Platte (19) durchdringt, wobei sich dessen Achse senkrecht oder im Wesentlichen senkrecht zur Ebene der Platte (19) erstreckt.

10. Verpackungsstruktur gemäß Anspruch 8, **dadurch gekennzeichnet, daß** das Loch (15) in oder durch ein ausgeschnittenes und/oder gefaltetes Teil (27) der Platte (19) gebildet ist, und zwar in geeigneter Weise, damit sich dessen Achse parallel oder im Wesentlichen parallel zur Ebene der Platte (19) erstreckt.

11. Verpackungsstruktur gemäß einem der Ansprüche 6 bis 10, **dadurch gekennzeichnet, daß** die Platte (19) eine ebene Zone (26) aufweist, die auf der Seite des unteren Teils (4) des Behälterkörpers (3) zurückgesetzt ausgebildet ist und in dessen inneren Rand (20) mündet, wobei in der zurückgesetzten ebenen Zone (26) das bzw. die Löcher (15) ausgebildet sind.

12. Verpackungsstruktur gemäß einem der Ansprüche 1 bis 11, **dadurch gekennzeichnet, daß** das Zubehör (11) eine Authängestruktur (14) aufweist die dazu ausgebildet ist, dessen Aufhängen an wenigstens einem in der Deckelstruktur (7) ausgebildeten Loch (15) zum Zwecke des Bildens einer trennbaren Einheit zu ermöglichen.

13. Verpackungsstruktur gemäß den Ansprüchen 3 und 12 in Kombination, **dadurch gekennzeichnet, daß** die Aufhängestruktur (14) im Bereich des von seinem funktionellen Strukturteil (12) entfernt gelegenen freien Endes (13') des Stils (13) des Zubehörs (11) ausgebildet ist.

14. Verpackungsstruktur gemäß Anspruch 1, **dadurch gekennzeichnet, daß** das Zubehör (11) eine Aufhängestruktur (28) aufweist, die dazu ausgelegt ist, dessen Aufhängen am die Öffnung (22) für den Zugang zum verpackten Gut begrenzenden inneren Rand (21) zu ermöglichen.

15. Verpackungsstruktur gemäß den Ansprüchen 2 und 14 in Kombination, **dadurch gekennzeichnet, daß** das Zubehör (11) eine Aufhängestruktur (28) aufweist, die dazu ausgelegt ist, dessen Aufhängen am inneren Rand (20) der Platte (19), der den ringförmigen Kragen (18) des Montagerings (8) verlängert, zu ermöglichen.

16. Verpackungsstruktur gemäß einem der Ansprüche 14 oder 15, **dadurch gekennzeichnet, daß** die Aufhängestruktur (28) in Form von zwei Armen (29, 30) vorliegt, die zwischen sich eine Kerbe (31) zum Aufstecken auf den die Öffnung (22) für den Zugang zum verpackten Gut begrenzenden inneren Rand (21) begrenzern.

## Claims

1. Packaging structure for the storage and the distribution of a bulk product, for example a powder product, which packaging structure (1) includes:
- a container (2) in the form of a box, which container (2) includes (i) a metal container body (3) provided with a lower part (4) and an upper part (5), which upper part (5) delimits an upper opening (6), and (ii) a lid structure (7), to seal said upper opening (6),
said lid structure (7) comprises:
(i) a metal mounting ring (8) including - an external part (16) adapted to be fixed on an edge of said container body (3) delimiting said upper opening (6), and - an internal part (17) provided with an annular flange (18), intended to extend at said body opening (6), said internal part (17) including an internal edge (21) delimiting an access opening (22) to the packaged product,
(ii) a sealing member (9) for said access opening (22) to the packaged product, consisting in a peelable membrane (9) hermetically fixed, in a detachable manner, to said annular flange (18), and
(iii) a removable overcap (10), intended to be positioned on the upper edge of the container body (3), above said mounting ring (8) and its associated sealing member (9), to seal said access opening (22) to the packaged product, and
- an accessory (11) for the collection and the distribution of a portion of said packaged product,
**characterized in that** said packaging structure (1) includes means (14, 15, 28) for making a releasable assembly of said accessory (11) with said metal mounting ring (8).

2. Packaging structure according to claim 1, **characterized in that** the annular flange (18) of the mounting ring (8) is continued towards the inside by a plate (19), which plate (19) is in the shape of a disk segment, provided with an internal edge (20) that delimits a part of said access opening (22) to the packaged product, and which plate (19) extends in the plan or substantially in the plan of said annular flange (18).

3. Packaging structure according to any one of claims 1 or 2, **characterized in that** said accessory (11), for the collection and the distribution of the product, includes a handle (13) at one end of which is arranged a functional structural part (12) for the collection and the distribution of the product.

4. Packaging structure according to claim 3, **characterized in that** said accessory (11), for the collection and the distribution of the product, consists in a measuring spoon, provided with a cup-shaped functional structural part (12).

5. Packaging structure according to claims 2 and 3 taken in combination, **characterized in that** said releasable assembly means include at least one orifice (15) formed in said mounting ring (8), adapted to receive the functional structural part (12) or the handle (13) of said accessory (11).

6. Packaging structure according to claim 5, **characterized in that** said orifice(s) (15) are made in the plate (19) that continues the annular flange (18) of the mounting ring (8).

7. Packaging structure according to claims 4 and 6 taken in combination, **characterized in that** said plate (19) includes an orifice (15), of closed contour or emerging in its internal edge (20), adapted to receive, by embedding, the cup-shaped functional structural part (12) of said accessory (11).

8. Packaging structure according to claims 4 and 6 taken in combination, **characterized in that** said plate (19) includes at least one orifice (15) adapted to receive the handle (13) of said accessory (11).

9. Packaging structure according to claim 8, **characterized in that** said orifice (15) goes through the plate (19), its axis extending perpendicularly or substantially perpendicularly to the plan of said plate (19).

10. Packaging structure according to claim 8, **characterized in that** said orifice (15) is made in or by a cut and/or folded part (27) of said plate (19), in a manner adapted so that its axis extends parallel or substantially parallel to the plan of this plate (19).

11. Packaging structure according to any one of claims 6 to 10, **characterized in that** said plate (19) includes a back-standing planar area (26) on the side of the lower part (4) of the container body (3) and emerging in the internal edge (20) thereof, back-standing planar area (26) in which are formed said orifice(s) (15).

12. Packaging structure according to any one of claims 1 to 11, **characterized in that** said accessory (11) includes a hanging structure (14) arranged so as to allow the hanging thereof to at least one orifice (15) formed in said lid structure (7), for the releasable assembly thereof.

13. Packaging structure according to claims 3 and 12 taken in combination, **characterized in that** said hanging structure (14) is made at the free end (13') of the handle (13) of the accessory (11), located opposite its functional structural part (12).

14. Packaging structure according to claim 1, **characterized in that** said accessory (11) includes a hanging structure (28) arranged so as to allow the hanging thereof on the internal edge (21) delimiting said access opening (22) to the packaged product.

15. Packaging structure according to claims 2 and 14 taken in combination, **characterized in that** said accessory (11) includes a hanging structure (28) arranged so as to allow the hanging thereof to the internal edge (20) of the plate (19) that continues the annular flange (18) of the mounting ring (8).

16. Packaging structure according to any one of claims 14 or 15, **characterized in that** said hanging structure (28) is in the form of two arms (29, 30) delimiting between each other an engagement notch (31) on said internal edge (21) delimiting said access opening (22) to the packaged product.
